# EUROPEAN PATENT SPECIFICATION

(11) **EP 3 048 160 B1**
(45) Date of publication and mention of the grant of the patent: **26.02.2020**
(21) Application number: 14845605.6
(22) Date of filing: 11.08.2014
(51) Int. Cl.: C10B 53/07, C10B 47/30, C10G 1/10

(54) **FACILITY FOR THE ELIMINATION OF PLASTIC CONTAINED IN URBAN AND INDUSTRIAL WASTE**
ANLAGE ZUR ENTFERNUNG VON KUNSTSTOFF IN STÄDTISCHEM UND INDUSTRIELLEM ABFALL
INSTALLATION D'ÉLIMINATION DE PLASTIQUES CONTENUS DANS DES RÉSIDUS URBAINS ET INDUSTRIELS

(30) Priority: 17.09.2013 ES 201331343
(43) Date of publication of application: 27.07.2016
(73) Proprietor: Nova Inmobiliaria 2003 SL, 08027 Barcelona (ES)
(72) Inventor: HUGUET FARRÉ, Jordi I., 08031 Barcelona (ES)
(74) Representative: Villamor Muguerza, Jon
(86) International application number: PCT/ES2014/070651
(87) International publication number: WO 2015/040256

(56) References cited:
- WO-A1-00/53385
- WO-A1-2009/130524
- WO-A2-2012/172527
- US-A1- 2006 076 224
- US-A1- 2009 314 622
- US-A1- 2010 133 085
- US-A1- 2010 133 085
- US-A1- 2010 289 270
- US-A1- 2010 289 270
- US-B1- 6 182 584

## Description

### OBJECT OF THE INVENTION

The present invention relates to a facility for the elimination of plastics contained in urban and industrial waste in which a pyrolytic-based, low temperature thermal treatment is performed by means of a continuous cleaning furnace, which thereby allows breaking down the plastics to obtain different types of hydrocarbons, both liquid and gaseous hydrocarbons, and the total elimination of the plastic as waste.

The process implemented in the facility is performed in an isolated and controlled circuit.

The process of the invention accepts different types of plastic materials such as polyethylene terephthalate, high-density polyethylene, polyvinyl chloride, low-density polyethylene, polypropylene and polystyrene, such that such materials can be processed both alone and as a mixture, except for PVC which must always be processed in a mixture with other plastics, in a maximum proportion of 5%.

The object of the invention is to achieve a complete elimination of plastic waste with no CO₂ generation and to obtain both gaseous and liquid hydrocarbons a part of which can be used as fuel for heating the system itself and the remaining for generating electric energy.

This object is achieved by a facility for the elimination of plastic contained in urban and industrial waste according to claim 1.

### PRIOR ART

The purpose of most pyrolytic-based systems is the elimination of all types of waste, the proposal of the present invention focuses in a specialized manner on the elimination of plastics. One advantage with respect to any other type of technology is that up to 5% PVC can be incorporated, since the gas cleaning system allows collecting chlorine by means of the gas cleaning system implemented in the technical solution of the present invention.

Today, there are facilities in Europe and Great Britain with pyrolytic-based furnaces having capacities not exceeding 6,000 tons a year, and their operation is not continuous like the one being considered herein. The proposal of the present invention reaches elimination of 8,000 tons a year and the operation scheme is continuous with technical maintenance shutdowns.

None of the known facilities describes a gas cleaning process with the method considered herein, such that they cannot assure the reduction in CO₂ emissions proposed by the system of the present invention.

All the existing examples that are known to be in use work at high temperatures above 900°C, which means that the emissions of dioxins and furans are not limited. In the proposal of the present invention, the fact of not working directly with flame and not reaching a temperature of 500°C successfully reduces the emissions of dioxins to the minimum and reduces furans to 0.000.

US 2010/0289270 A1 discloses a pyrolytic process for converting organic wastes. US 2010/0133085 A1 discloses a system and a method for recycling tyres and plastic materials. WO 2012/172527 A2 discloses a system for continuous recycling of waste plastic feedstock into liquid fuels. US 2006/0076224 A1 discloses a pyrolysis system of waste synthetic-highly polymerized compound. WO 00/53385 discloses a system for recovery of desirable constituent material from vehicle tire pieces through pyrolysis.

### DISCLOSURE OF THE INVENTION

The method implemented in the facility according to claim 1 is based on a series of operative phases or steps whereby the plastic waste contained in urban and industrial waste is eliminated and at the same time hydrocarbons in solid or liquid state are obtained for use thereof.

Specifically, the method implemented in a facility according to the invention as defined in claim 1 comprises the following operative phases:
- crushing the plastic material to chip state with a maximum size of 1 cm in diameter,
- drying said plastic material by means of a rotary drum and hot air, with a maximum moisture content of 5%,
- conveying the dry plastic material to the inlet of a pyrolytic furnace where the pyrolysis of the material occurs at a temperature comprised between 250°C and 500°C,

- breaking down the plastic material in the pyrolytic furnace, obtaining different hydrocarbon chains, some in the form of gas and others in the form of hydrocarbons mixed with water, i.e., solids,
- washing the gases from the preceding step,
- dehumidifying the gases washed in the preceding step to eliminate most of the moisture contained in said gases,
- storing the gases in a gasometer for use as fuel,
- separating the hydrocarbons mixed with water by means of centrifugation to achieve the separation of the hydrocarbons themselves from water,
- recovering the water used throughout the process and treating same by means of an activated carbon system, in order to assure the absorption of
the remaining hydrocarbons and the reuse of water in the gas washing step. The specific steps referred to above may vary depending on the materials to be treated and the compounds to be attained.

Complementarily, the method can include a step for burning the nominal flow rate produced by the plant, in the case of filling the gas accumulator to the maximum, said step being based on the use of an auxiliary flare having sufficient capacity for burning that nominal flow rate produced by the plant.

The facility according to claim 1 comprises first a hopper for receiving the material, followed by a feeding system for feeding the material to the pyrolytic furnace where the plastic material is transformed or broken down, such that the hopper for receiving the material internally incorporates a stirrer and a vibrating system in correspondence with an inverted frustoconical section forming the lower part of the hopper, the outlet thereof being connected, through an elastic connection and with the interposition of a filling valve, with a conduit feeding a screw conveyor for conveying the material to the pyrolytic furnace, wherein before reaching the screw conveyor, a chamber for receiving the material with a leak-tight system is arranged, as well as a gate for accessing same, opening a cylinder where there is arranged a cleaning system and a press pressing on the material to be treated, with an air extraction valve.

An intermediate safety plug defined by accumulation of the plastic material is arranged in the screw conveyor, such that from that chamber for receiving the material and the corresponding screw conveyor, the material reaches the pyrolytic furnace, the latter being made up of an isolated and insulated chamber, inside which there is arranged a hermetically closed cylinder, determining the pyrolysis chamber itself, with a rotary drum or trommel therein, further comprising externally with respect to that chamber, the corresponding combustion chamber where the heat necessary for the operation of the process is generated.

The heating system will be made up of gas burners and fans for correctly distributing heat, the gas burners generally working with the fuel stored in the gasometer or gas accumulator, although there must be a supply external to the facility to start the process.

As regards the pyrolysis chamber, it is cylindrical and made from heat- and corrosion-resistant materials, being arranged longitudinally with respect to the combustion chamber and having an opening for the entry of material, for the exit of gas and the exit of solid residues, having a completely sealed closure with a stuffing box at the two ends, for the support shaft of the rotary drum, this being made of resistant materials, like the pyrolysis chamber, forming a body with said chamber but isolated from the combustion chamber.

The combustion chamber, in addition to the outlet for gases, includes a lower outlet for solid residues, these being collected in a sealed outer chamber, depressurized and with inert atmosphere, which chamber will internally contain a container for collecting the solids, with a gate for removing the container, a valve for isolation with respect to the pyrolysis chamber, a depressurizing system and a system for the inertization of the internal atmosphere by nitrogen injection.

Next, the facility comprises a gas washing system for washing gases in a leak-tight circuit completely isolated from the atmosphere, formed by a pair of tanks into which finely sprayed water is injected for entraining the hydrocarbons reaching those tanks, these vertically arranged tanks having a cylindrical configuration, such that the lower end of those gas washing tanks has a frustoconical configuration and there are arranged on the outlet itself receiving tanks for controlled emptying, such that in this emptying tank or emptying tanks, there is arranged a plug formed by the liquid itself, preventing the entry of air during discharge, so it is important that said discharge is performed rapidly and never to the extent of eliminating all the liquid, so that a liquid column with sufficient weight is formed and said plug is created.

Both ends of those controlled emptying tanks have a frustoconical configuration to prevent the entry of air bubbles during discharge, all this being controlled by means of levels and a pneumatic emptying valve.

The washed gases, i.e., gases free of heavy and intermediate hydrocarbons, which entrain a lot of moisture are passed to a dehumidifier made up of a heat exchanger cooling the gases until reaching the temperature as close as possible to the dew point, such that the condensed water is collected in a completely leak-tight tank, the gas passing through that tank, in which it includes at the top, i.e., in the upper part thereof, a droplet separator, the condensed water accumulating at the bottom for extraction by means of a pump.

A water column height suitable for forming a liquid plug and preventing air from entering must be maintained in this dehumidifying tank, that column being regulated by means of maximum and minimum levels.

The dehumidified gas is extracted by means of a turbine and is sent to a gasometer or accumulator for the subsequent use of said gas, there being arranged at the inlet of the gasometer a pressure regulating valve to prevent overpressures therein, as well as an automatic valve, as well as an automatic three-way valve to divert a part of the gas flow to a flare capable of burning the surplus gas, i.e., said auxiliary flare has sufficient capacity for absorbing the production flow rate in the case of filling the gasometer to the maximum, also being necessary for the operations of starting up the plant, shutting down the plant and purging the circuit, as well as serving as a relief valve and preventing the leakage of contaminant gases.

About 20% of the gas stored in the gasometer can be used as fuel for heating the pyrolysis itself, while the remaining can be dedicated to generating electric energy by means of a cogeneration and/or combustion system.

The mixture of water and hydrocarbons leaving the gas washing tanks is pumped to tanks for treatment and filtration by means of activated carbon, after passage through a centrifuge in which 95% of the hydrocarbons are separated from water, such that the remainder hydrocarbons are retained in the system and equipment for filtration by means of activated carbon, making it possible to reuse the water in the gas washing process.

### DESCRIPTION OF THE DRAWINGS

To complement the description that is being made and for the purpose of aiding to better understand the features of the invention, a set of drawings is attached to the present specification, forming an integral part thereof, in which the following has been depicted with an illustrative and non-limiting character:
Figure 1 shows a schematic depiction of the facility for the elimination of plastics contained in urban and industrial waste.
Figure 2 shows a detail of the means participating in conveying the plastic material from the storage hopper to the pyrolytic furnace.
Figure 3 shows an enlarged detail of the pyrolytic furnace, as well as the inlet to the furnace for the plastic material and the outlet for gases, on one hand, and for hydrocarbons mixed with liquids, on the other.
Figure 4 shows an enlarged detail of the way of collecting in a sealed chamber hydrocarbons mixed with water coming from the pyrolysis furnace.
Figure 5 shows a detail of the controlled emptying tank envisaged at the outlet of the gas washing tanks.
Figure 6 shows another enlarged detail of the gas dehumidifying system.

### DETAILED DISCLOSURE OF THE INVENTION

As can be seen in the mentioned drawings, the facility for the elimination of plastic contained in urban and industrial waste according to the invention comprises first a hopper (1) in which the plastic material is crushed, from which hopper (1) the crushed plastic material is sent through a conveying element (2) to a drier (3) with a rotary drum and hot air, with a maximum moisture content of 5%, from which drier (3) and through other conveying means (4), the plastic material treated in the described manner, reaches a storage hopper or tank (5), from which the corresponding pyrolytic furnace (6) is fed, with the particularity that that storage hopper or tank (5) includes a lower frustoconical section (5'), as well as an inner stirrer (7), and in correspondence with the frustoconical section (5') a shaker (8), the latter envisaged to prevent the formation of bulges in the material, while the stirrer (7) is envisaged to speed up the travel of said material to the lower zone.

The storage hopper (5) will have several grounding points for the elimination of static currents that may be generated.

The frustoconical lower part (5') ends in a rectangular outlet mouth attached by means of an elastic connection (9) to the feeding system of the pyrolytic furnace (6), to allow the movement caused by the shaker (8).

After the elastic connection (9) there has been envisaged a filling valve (10), after which a cylinder (11) receiving the material is included and in which cylinder there is arranged a cleaning system (12), a press (13) and an air extraction valve (14), giving access to a chamber (16) for receiving the material, according to a leak-tight system, and then a screw conveyor (17) with a safety plug (18) formed by the solids. In other words, the system is based on pressing the material for extracting air that remains between the plastic chips, using to that end the press (13) formed by a hydraulic plunger which presses on the material until reducing its volume, expelling the air through the extraction valve (14), the gate (15) then opening so that the compressed, air-free product or material accesses the chamber (16) which is part of the conveyance system in which the screw conveyor (17) with its safety plug (18) formed by the pressed material itself is established.

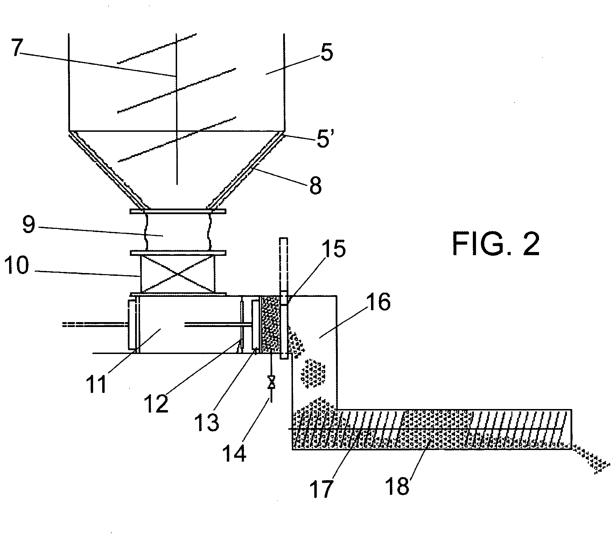

In other words, as can be seen in Figure 2 the screw conveyor (17) has a spiral-free intermediate section, where the material accumulates to form said plug (18), thereby preventing the entry of air in the case of a poor operation of the system described up until now.

That screw conveyor (17) drives the product or material to the pyrolytic furnace (6), the latter being made up of an outer isolating chamber, insulated to prevent heat losses and which corresponds with the reference (6) itself, inside which there is assembled the pyrolysis chamber (19) itself formed by a hermetically closed cylinder, inside which a rotary drum or trommel (20) is arranged, such that the product is treated in that pyrolysis chamber (19).

The corresponding combustion chamber (21), in which the heat necessary for the operation of the process is generated, is established between the isolated outer chamber (6) and the pyrolysis chamber (19).

The objective is to reach controlled temperatures between 250° and 500°C in the pyrolysis chamber (19), depending on the interest, for a residence time of the material between 20 and 40 minutes, with maximum energy efficiency.

The heating means will be made up of gas burners (22), as well as inner fans (23) for correctly distributing heat.

Returning to the pyrolysis chamber (19), said chamber has a cylindrical configuration with an approximate diameter of 1,000 mm, and an approximate length of 10,000 mm, without these dimensions being definitive, although in any case the chamber will be made of heat- and corrosion-resistant materials, being provided with a smoke outlet (24), a gas outlet (25), as well as a solid residue outlet (26).

The pyrolysis chamber (19) will have a construction completely sealed with a stuffing box (27) at the ends, for the support shaft of the rotary drum (20) itself, the function of the rotary drum (20) is to hold the material during the process and assure that it breaks down correctly, since in view of the rotation about its own axis, it will turn the material therein, moving it longitudinally to the opposite end, thereby giving the time necessary for the material to break down and driving the possible residues of other materials that may be mixed with the plastic.

Said rotary drum (20) will also be made of heat- and corrosion-resistant material and is open at both ends, being internally provided with a system with spiral blade to make the travel of the material easier, the rotational speed thereof being variable between 6 and 25 r.p.m. and the direction of rotation thereof will be reversible, according to needs, forming in any case a body with the pyrolysis chamber (19) and isolated from the combustion chamber (21).

On the other hand, the solid residues from the rotary drum (20) are collected in a sealed chamber (28), which residues pass through a hopper (26) going through the pyrolysis chamber (19) and the combustion chamber (21) itself, the chambers in question being independently sealed so that there will be no mixture or contamination of the different gases circulating through them.

Those solid residues are discharged after passage through a valve (29) to the sealed chamber (28) itself by means of a pump (30) for the inertization of the internal atmosphere by nitrogen injection (31), with the particularity that a container (32) for collecting the solids is located inside the sealed chamber (28), the chamber (28) having a gate (33) for introducing and removing the container (32) itself.

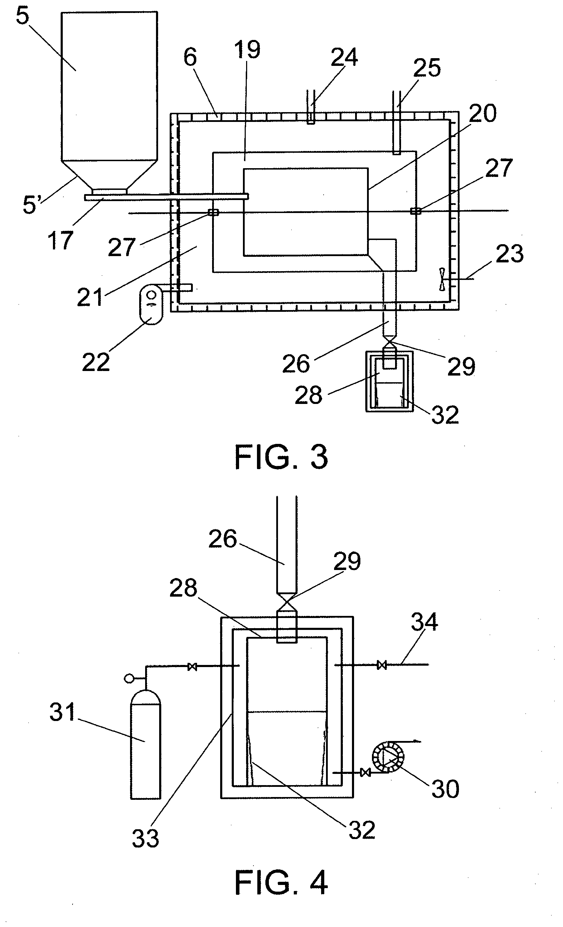

This assembly depicted in Figure 4 allows operating with the load without having to stop the process since it allows isolating the discharge chamber or conduit (26) from the pyrolysis with the valve (29), as well as equalizing the internal atmosphere with the external atmosphere by means of a venting system (34), so that once the container (32) has been changed, the pressure of the chamber (28) is equalized with the inner pyrolysis chamber, such that in this process atmospheric air is replaced with nitrogen to prevent the risk of combustion and likewise prevent contamination in the pyrolysis chamber (19).

As regards the gases generated in the pyrolysis chamber (19), they reach through the outlet (25) a washing system in a leak-tight circuit completely isolated from the atmosphere, for which finely sprayed water is injected through the conduit (35) into the tanks (36, 36') receiving the aforementioned gases, such that the microdroplets produced by the injection of water into the tanks (36, 36') cause an entrainment effect on heavier hydrocarbons, such as oils and tars, while the gases are not altered, cooling of the mixture at a temperature close to the temperature of the injected water also being performed in the process.

This process is performed in two phases, the first phase is performed in the vertically arranged cylindrical tank (36) made of corrosion-resistant steel with the corresponding gas inlet in the upper part and an outlet in the lower part. The second phase is performed in an identical tank (36') for the purpose of eliminating any particle not retained in the first tank, the operation being identical to the preceding one.

In any case, the frustoconical lower part (37) of the tanks (36, 36') have an inclination of about 60°, such that at the outlet end of that frustoconical configuration (37) there has been envisaged, for each tank, a controlled emptying tank (38), it being necessary that the liquid mixed with the hydrocarbon accumulating at the bottom to be emptied such that no air enters the system, taking into account that the inside of the respective tank (36, 36') is at a lower pressure than the atmospheric pressure.

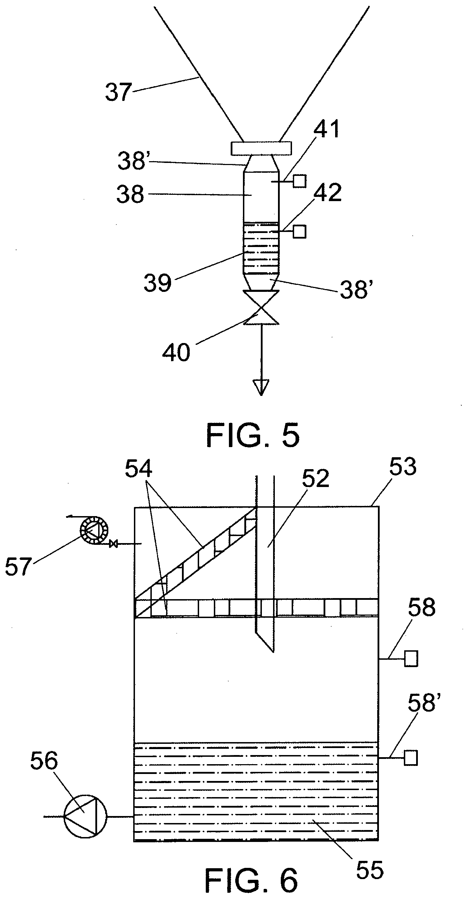

Specifically, the water mixed with hydrocarbons is emptied using that controlled emptying tank (38) which is made of corrosion-resistant steel and designed to prevent the entry of air during discharge, such that the liquid itself forms a plug (39), as shown in Figure 5, it being important that the discharge occurs rapidly and never to the extent of eliminating all the liquid, so that there is always a liquid column with sufficient weight for generating the mentioned plug (39). The ends (38') of each controlled emptying tank (38) have a frustoconical configuration to prevent the entry of air bubbles during discharge, having at the outlet an discharge valve (40) arranged at specific heights of the levels.

Both tanks (36. 36') have a common outlet (43), the mixture of water and hydrocarbons from the tanks (36, 36') being driven by means of a pump (44) envisaged in the outlet (43) to an intermediate buffer tank (45) and then, by means of another pump (46), the mentioned mixture is introduced in a centrifuge (47), where 95% of the hydrocarbons are separated from water, the water being collected in another buffer tank, (48), envisaged at the outlet of the centrifuge (47), and by means of a new pump (49), the water is treated by means of a piece of activated carbon-based filtration equipment, shown as tanks (50), such that the activated carbon of those tanks (50) retains the remainder hydrocarbons, making it possible to reuse the water in the gas washing process, through the conduit (51) communicating the outlet of those activated carbon-based tanks (50) with the washing tanks (36. 36').

As regards the gases washed in the tanks (36, 36'), they are sent through the outlet (52) of the tank (36') to a dehumidifying system (53), since those gases free of heavy and intermediate hydrocarbons entrain a large amount of moisture, so the dehumidification thereof is necessary.

The dehumidifying system comprises a heat exchanger cooling the gases until reaching the temperature closest possible to the dew point, such that the temperature must be slightly higher than the liquefaction temperature of the gas of the mixture, so that it liquefies at a temperature between 4° and 5°C higher.

The condensed water is collected in the tank corresponding to reference (53) itself of Figure 6, which is completely leak-tight and made of corrosion-resistant steel, the gas passing through that tank (53), being provided with a droplet separator (54) in its upper part, such that the condensed water (55) drops by gravity and is extracted from the lower part thereof through a pump (56), the gases leaving through the upper part driven by a pump (57). The tank (53) has a maximum level (58) and minimum level (58').

To prevent the entry of air into the circuit, the water is extracted through the lower part of the tank, as depicted in Figure 6, keeping a column height greater than 500 mm at all times, forming a liquid plug with the condensed liquid (55), while the dehumidified gas is extracted by means of the turbine or pump (57) through the upper part, as depicted also in that Figure 6.

Gases from the dehumidifier (53) are sent to a gasometer driven and drawn by the turbine or pump (57), the speed and flow rate thereof being variable for maintaining the optimum internal negative pressure conditions in the circuit at all times, the turbine or pump being programmed for circulating the gases. Said turbine or pump also has the function of driving the gases reaching the gasometer (59), like the gas accumulation tank, this part of the facility being two in number for the case of malfunction or maintenance, such that the gases stored in the gasometer (59) can be reused, an automatic three-way valve (61) being established for diverting a part of the gas flow to a flare (62) which, as an auxiliary element, has sufficient capacity for absorbing the production flow rate in the case of filling the gasometer (59) to the maximum, the function thereof also being necessary for the operations of starting up the facility, shutting down the facility and purging the circuit, as well as serving as a relief valve and preventing the leakage of contaminant gases.

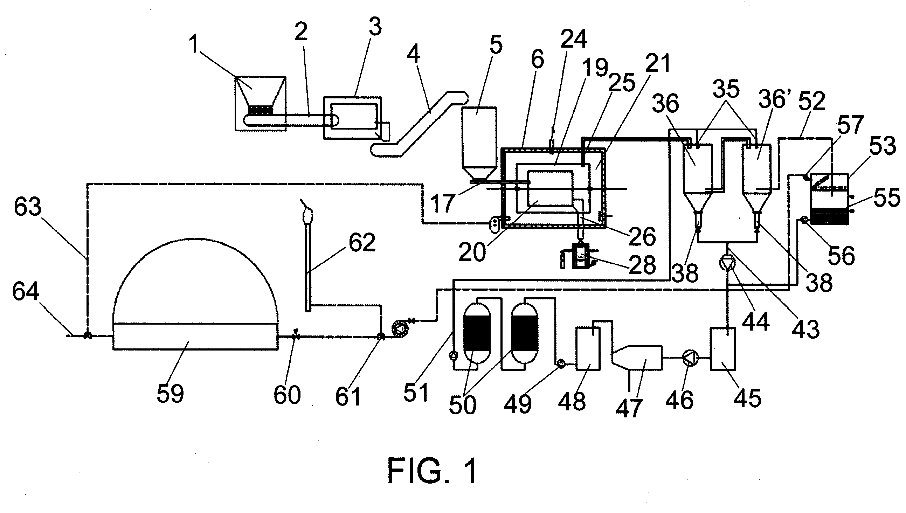

The part of gas stored in the gasometer (59) which is not used can be dedicated to generating electric energy by means of a cogeneration and/or combustion system. Figure 1 itself shows the conduit (63) for using the gas from the gasometer (5), being reused in pyrolysis, while the remaining gas will be used for generating electric energy through the conduit (64) as described above.

## Claims

1. A facility for the elimination of plastics contained in urban and industrial waste, **characterized in that** it comprises a hopper (1) for crushing the plastic material, a conveyor (2) moving towards a drying rotary drum (3), from which the plastic material is sent through a conveyor (4) to a vertical hopper (5), after which there is arranged a feeding system for feeding the plastic material to a pyrolytic furnace (6), in which the plastic material is broken down, with a pyrolysis chamber (19) and an inner rotary drum (20), with a solid waste outlet (26), and a gas outlet (25), after which there is a washing system formed by two tanks (36, 36') into which water is injected through a common conduit (35), after which there is arranged a dehumidifying system (53) for dehumidifying the gases from the washing system, while the tanks (36, 36') have a common water and solid outlet (43), from which the solids are centrifuged in a centrifuge (47) and then treated with activated carbon in tanks (50), to recover water which is again injected into the washing system (36, 36'), with the particularity that the dehumidified gases in the dehumidifier (53) are sent to a gas accumulation gasometer (59) and where the hopper (5) for storing the plastic material to be treated includes a lower frustoconical section (5) with a shaker (8), and internally a stirrer (7), such that between the outlet of that frustoconical section (5') and the pyrolysis chamber (19) of the pyrolytic furnace (6), there is a feeding system made up of an elastic connection (9) followed by a filling valve (10) and then a cylinder (11) with a press formed by a hydraulic plunger (13) and a cleaning system (12), wherein the press presses the plastic material which then passes through a gate (15) to a chamber (16) and continues into a screw conveyor (17) with a spiral-free intermediate section to define an intermediate safety plug (18).

2. The facility for the elimination of plastics contained in urban and industrial waste according to claim 1, **characterized in that** the pyrolysis chamber (19) is isolated, insulated and leak-tight, and wherein a combustion chamber (21) is established externally between the outer chamber of the pyrolytic furnace (6) and the pyrolysis chamber (19), and, in said combustion chamber, heating by means of burners (22) and a correct heat distribution by means of fans (23) take place; and the pyrolysis chamber (19) includes a gas outlet (25) and the solid waste outlet (26) for the exit of solid waste to a sealed outer chamber or venting system (34) and with depressurizing system (30) and nitrogen ejecting inertization system (31), the sealed chamber (28) comprising an inner container (32) which can be easily introduced and removed through a gate (33).

3. The facility for the elimination of plastics contained in urban and industrial waste according to claims 1 to 2, **characterized in that** the tanks (36, 36') for washing gases have their frustoconical lower section (37) opening into a controlled emptying tank (38) with frustoconical ends (38') and a plug (39) formed by the liquid itself, as well as a discharge valve (40), those controlled emptying tanks (38) opening into a common conduit (43) in which a pump (44) sending the hydrocarbons or mixture of hydrocarbons and liquid to the system for separating water from the rest of the hydrocarbons has been envisaged.

4. The facility for the elimination of plastics contained in urban and industrial waste according to claims 1 to 3, **characterized in that** in the conduit for sending the gases to the gas accumulation gasometer (59), there is a pressure regulating valve (60) and a three-way valve (61), at the outlet of which a flare (62) is arranged as an auxiliary element for burning the surplus gas.

5. The facility for the elimination of plastics contained in urban and industrial waste according to claims 1 to 4, **characterized in that** in the dehumidifier (53), with its inlet (52) for gas coming from the washing system, comprises a droplet separator (54), as well as a plug (55) formed by the condensation of water at the bottom of the corresponding tank forming said dehumidifier (53), the latter including an outlet with pump (57) for the gases and a liquid outlet with pump (58).

## Patentansprüche

1. Anlage zur Entfernung von Kunststoffen in städtischem und industriellem Abfall, **dadurch gekennzeichnet, dass** sie Folgendes umfasst: einen Trichter (1) zum Zerkleinern des Kunststoffmaterials, einen Förderer (2), welcher sich zu einer Trocknungsdrehtrommel (3) hin bewegt, von welcher aus das Kunststoffmaterial über einen Förderer (4) zu einem vertikalen Trichter (5) geliefert wird, nach welchem ein Einspeisungssystem zum Einspeisen des Kunststoffmaterials in einen Pyrolyseofen (6) angeordnet ist, in welchem das Kunststoffmaterial zersetzt wird, mit einer Pyrolysekammer (19) und einer inneren Drehtrommel (20), mit einem Feststoffabfallausgang (26) und einem Gasausgang (25), nach welchem es ein Waschsystem gebildet aus zwei Tanks (36, 36') gibt, in welche über eine gemeinsame Leitung (35) Wasser injiziert wird, nach welchen ein Entfeuchtungssystem (53) zum Entfeuchten der Gase aus dem Waschsystem angeordnet Ist, wobei die Tanks (36, 36') einen gemeinsamen Wasser- und Feststoffausgang (43) aufweisen, aus welchem die Feststoffe in einer Zentrifuge (47) zentrifugiert werden und dann mit Aktivkohle in Tanks (50) behandelt werden, um Wasser zurückzugewinnen, welches erneut in das Waschsystem (36, 36') injiziert wird, mit der Besonderheit, dass die im Entfeuchter (53) entfeuchteten Gase zu einem Gasansammlungsgasometer (59) geliefert werden und wobei der Trichter (5) zur Speicherung des zu behandelnden Kunststoffmaterials einen unteren kegelstumpfförmigen Abschnitt (5) mit einem Schüttler (8), und im Inneren einen Rührer (7) beinhaltet, sodass es zwischen dem Ausgang des kegelstumpfförmigen Abschnitts (5') und der Pyrolysekammer (19) des Pyrolyseofens (6), ein Einspeisungssystem gebildet aus einer elastischen Verbindung (9) gefolgt von einem Füllventll (10) und dann einem Zylinder (11) mit einer Presse gebildet aus einem Hydraulikkolben (13) und einem Reinigungssystem (12) gibt, wobei die Presse das Kunststoffmaterial presst, welches dann durch ein Tor (15) zu einer Kammer (16) geht und zu einem Schraubenförderer (17) mit einem schneckenfreien Zwischenabschnitt weitergeht, um einen zwischenliegenden Sicherungsstopfen (18) zu definieren.

2. Anlage zur Entfernung von Kunststoffen in städtischem und industriellem Abfall nach Anspruch 1, **dadurch gekennzeichnet, dass** die Pyrolysekammer (19) vereinzelt, isoliert und leckdicht ist, und wobei eine Brennkammer (21) äußerlich zwischen der äußeren Kammer des Pyrolyseofens (6) und der Pyrolysekammer (19) eingerichtet ist, und in der genannten Brennkammer Erwärmung mittels Brenner (22) und eine ordnungsgemäße Wärmevertellung mittels Gebläse (23) erfolgen; und die Pyrolysekammer (19) einen Gasausgang (25) und den Feststoffabfallausgang (26) für den Ausgang des Feststoffabfalles zu einer abgedichteten Außenkammer oder Lüftungssystem (34) und mit einem Druckentspannungssystem (30) und einem stickstoffausstoßenden Inartisierungssystem (31) beinhaltet, wobei die abgedichtete Kammer (28) einen inneren Behälter (32) umfasst, welcher einfach durch ein Tor (33) eingeführt und entfernt werden kann.

3. Anlage zur Entfernung von Kunststoffen in städtischem und Industriellem Abfall nach den Ansprüchen 1 bis 2, **dadurch gekennzeichnet, dass** der kegelstumpfförmige untere Abschnitt (37) der Tanks (36, 36') zum Waschen der Gase sich zu einem gesteuerten Entleerungstank (38) öffnet, mit kegelstumpfförmigen Enden (38') und einem Stopfen (39) gebildet aus der Flüssigkelt selbst, sowie einem Auslassventil (40), wobei sich diese gesteuerte Entleerungstanks (38) zu einer gemeinsamen Leitung (43) öffnen, In welcher eine Pumpe (44) vorgesehen ist, welche die Kohlenwasserstoffe oder die Mischung aus Kohlenwasserstoffen und Flüssigkeit zum System zum Trennen von Wasser aus dem Rest der Kohlenwasserstoffe liefert.

4. Anlage zur Entfernung von Kunststoffen in städtischem und industriellem Abfall nach den Ansprüchen 1 bis 3, **dadurch gekennzeichnet, dass** es in der Leitung zur Lieferung der Gase zum Gasansammlungsgasometer (59) ein Druckregulierungsventil (60) und ein Dreiwegeventil (61) gibt, an dessen Ausgang eine Fackel (62) als Hilfselement zum Brennen des überschüssigen Gases angeordnet Ist.

5. Anlage zur Entfernung von Kunststoffen in städtischem und industriellem Abfall nach den Ansprüchen 1 bis 4, **dadurch gekennzeichnet, dass** der Entfeuchter (53), mit dessen Eingang (52) für das aus dem Waschsystem kommende Gas, einen Tropfenabscheider (54), sowle einen Stopfen (55) gebildet aus der Kondensation des Wassers am Boden des entsprechenden Tanks, welche den genannten Entfeuchter (53) bildet, umfasst, wobei Letzterer einen Ausgang mit Pumpe (57) for die Gase und einen Flüssigkeitsausgang mit Pumpe (58) beinhaltet.

## Revendications

1. Installation d'élimination de plastiques contenus dans des résidus urbains et industriels, **caractérisée en ce qu'**elle comprend une trémie (1) pour broyer le plastique, un convoyeur (2) se déplaçant vers un tambour rotatif de séchage (3), à partir duquel le plastique est envoyé par un convoyeur (4) vers une trémie verticale (5), après laquelle est disposé un système d'alimentation pour alimenter le plastique dans un four pyrolytique (6), où le plastique est dégradé, avec une chambre de pyrolyse (19) et un tambour rotatif intérieur (20), avec une sortie de résidus solides (26) et une sortie de gaz (25), après lequel il y a un système de lavage formé par deux réservoirs (36, 36') dans lesquels de l'eau est injectée par un conduit commun (35), après lequel est disposé un système de déshumidification (53) pour déshumidifier les gaz du système de lavage, les réservoirs (36, 36') ayant une sortie de solides et d'eau commune (43), à partir de laquelle les solides sont centrifugés dans une centrifugeuse (47) et en suite traités avec du charbon actif dans des réservoirs (50), pour récupérer de l'eau qui est à nouveau injectée dans le système de lavage (36, 36'), avec la particularité que les gaz déshumidifiés dans le déshumidificateur (53) sont envoyés dans un gazomètre à accumulation de gaz (59) et où la trémie (5) pour stocker le plastique à traiter comprend une section tronconique Inférieure (5) avec un mélangeur (8), et à l'intérieur un agitateur (7), tel qu'entre la sortie de cette section tronconique (5') et la chambre de pyrolyse (19) du four pyrolytique (6), un système d'alimentation composé d'une liaison élastique (9) suivie d'une soupape de remplissage (10), puis d'un cylindre (11) avec une presse formée par un piston hydraulique (13) et un système de nettoyage (12), dans laquelle la presse presse le plastique qui passe ensuite par une porte (15) vers une chambre (16) et continue dans un transporteur à vis (17) avec une section intermédiaire sans spirale pour définir un bouchon se sécurité intermédiaire (18).

2. Installation d'élimination de plastiques contenus dans des résidus urbains et industriels selon la revendication 1, **caractérisée en ce que** la chambre de pyrolyse (19) est isolée, protégée et étanche, et dans laquelle une chambre de combustion (21) est établie extérieurement entre la chambre extérieure du four pyrolytique (6) et la chambre de pyrolyse (19) et, dans ladite chambre de combustion, un chauffage par des brûleurs (22) et une distribution de chaleur correcte par des ventilateurs (23) sont réalisés ; et la chambre de pyrolyse (19) comprend une sortie de gaz (25) et la sortie de résidus solides (26) pour la sortie de résidus solides vers une chambre extérieure étanche ou un système de ventilation (34) et avec un système de dépressurisation (30) et un système d'inertisation (31) éjecteur d'azote, la chambre étanche (28) comprenant un récipient intérieur (32) qui peut être facilement introduit et enlevé par une porte (33).

3. Installation d'élimination de plastiques contenus dans des résidus urbains et industriels selon les revendications 1 à 2, **caractérisée en ce que** les réservoirs (36, 36') pour gaz de lavage ont leur section inférieure tronconique (37) ouverte dans un réservoir de vidange contrôlé (38) à extrémités tronconiques (38') et un bouchon (39) formé par le liquide lui-même, ainsi qu'une soupape de décharge (40), ces réservoirs de vidange contrôlé (38) s'ouvrant dans un conduit commun (43) dans lequel une pompe (44) envoyant les hydrocarbures ou le mélange d'hydrocarbures et de liquide au système pour séparer l'eau du reste des hydrocarbures a été envisagée.

4. Installation d'élimination de plastiques contenus dans des résidus urbains et industriels selon les revendications 1 à 3, **caractérisée en ce que** dans le conduit pour l'envoi des gaz vers le gazomètre à accumulation de gaz (59), il y a une soupape de régulation de pression (60) et une soupape à trois voies (61), à la sortie desquelles est disposée une torche (62) comme élément auxiliaire pour brûler le gaz en excès.

5. Installation d'élimination de plastiques contenus dans des résidus urbains et industriels selon les revendications 1 à 4, **caractérisée en ce que** dans le déshumidificateur (53), avec son entrée (52) pour le gaz provenant du système de lavage, comprend un séparateur de gouttes (54), ainsi qu'un bouchon (55) formé par condensation de l'eau au fond du réservoir correspondant formant ledit déshumidificateur (53), celui-ci comprenant une sortie avec pompe (57) pour les gaz et une sortie de liquide avec pompe (58).
